Europäisches Patentamt

European Patent Office

Office européen des brevets

(11) Veröffentlichungsnummer: **0 209 145**
**B1**

(12) **EUROPÄISCHE PATENTSCHRIFT**

(45) Veröffentlichungstag der Patentschrift: **18.07.90**

(21) Anmeldenummer: **86109845.7**

(22) Anmeldetag: **17.07.86**

(51) Int. Cl.⁵: **F 16 F 13/00,** B 60 K 5/12, F 16 F 9/46

(54) **Aktives Zweikammer-Motorlager mit hydraulischer Dämpfung.**

(30) Priorität: **18.07.85 DE 3525673**

(43) Veröffentlichungstag der Anmeldung:
**21.01.87 Patentblatt 87/04**

(45) Bekanntmachung des Hinweises auf die
Patenterteilung:
**18.07.90 Patentblatt 90/29**

(84) Benannte Vertragsstaaten:
**DE FR GB IT SE**

(56) Entgegenhaltungen:
EP-A-0 137 112
DE-A-3 314 335
GB-A-1 282 568

(73) Patentinhaber: **METZELER Gesellschaft mit
beschränkter Haftung
Gneisenaustrasse 15
D-8000 München 50 (DE)**

(72) Erfinder: **Härtel, Volker, Dr.
Fichtenstrasse 50
D-8034 Germering (DE)**

(74) Vertreter: **Michelis, Theodor, Dipl.-Ing.
Gneisenaustrasse 15
D-8000 München 50 (DE)**

Courier Press, Leamington Spa, England.

**Beschreibung**

Die Erfindung betrifft ein aktives Zweikammer-Motorlager mit hydraulischer Dämpfung, dessen mit einer elektroviskosen Flüssigkeit gefüllte und gummielastische Umfangswände aufweisende Kammern über einen durch parallele Elektroden begrenzten Kanal miteinander in Verbindung stehen, wobei die Viskosität der Flüssigkeit durch Anlegen eines elektrischen Feldes im Bereich des Kanals steuerbar ist.

Ein derartiges Lager ist aus der DE—OS—33 36 965 bekannt. Dabei wird der Kanal durch zwei in der Zwischenplatte mit Abstand voneinander angeordnete Plattenelektroden gebildet, so daß sich ein sehr flacher Kanal mit rechteckigem Querschnitt ergibt. Beim Anlegen einer Spannung an die Elektroden erhöht sich die Viskosität der durchströmenden elektroviskosen Flüssigkeit, wodurch sich die Dämpfung und insbesondere die Steifigkeit des Lagers elektrisch ansteuern lassen. Die dabei erreichbare Maximalsteifigkeit ist jedoch durch die Volumensteifigkeit der oberen Kammer begrenzt. Da man mit Hilfe des elektrischen Feldes nämlich den Kanal allenfalls verschließen kann, ergibt sich die Maximalsteifigkeit dieser Lageranordnung durch die Federsteifigkeit des Oberteils und der zusätzlichen Steifigkeit, die durch den virtuellen Kolbendurchmesser und die Volumensteifigkeit des Oberteils bestimmt wird. Höhere Steifigkeiten und damit ein größerer Regelweg sind mit einer derartigen Anordnung nicht zu erreichen.

Wesentlich sind bei einem solchen hydraulisch gedämpften Lager im Normalbetrieb Konfiguration und insbesondere Länge des Überströmkanals, da hier nach herkömmlichen Methoden die im Kanal befindliche Flüssigkeitssäule auf gängige Eigenresonanzen abgestimmt werden kann.

Der vorliegenden Erfindung liegt demgegenüber die Aufgabe zugrunde, ein aktives Zweikammer-Motorlager zu schaffen, mit dem ein größerer Regelbereich möglich ist und eine Steifigkeit erreicht werden kann, die weit über die durch die Volumensteifigkeit der motorseitigen Kammer gegebene Steifigkeit hinausgeht.

Zur Lösung dieser Aufgabe ist erfindungsgemäß vorgesehen, daß sich die Elektroden in der Lastrichtung des Lagers erstrecken, wobei die erste Elektrode an einer starren, die Kammern voneinander trennenden Zwischenplatte angeordnet ist und die Gegenelektrode mit der als Tragfeder wirkenden Kammerwandung mechanisch gekoppelt ist, wodurch der Überdeckungsgrad der Elektroden in Abhängigkeit von der Einfederung der Tragfeder veränderbar ist.

Die starre Zwischenplatte sollte dabei mindestens zwei konzentrisch angeordnete ringförmige Elektroden mit dazwischenliegenden Ringspalten aufweisen, in die von oben ebenfalls konzentrisch angeordnete ringförmige Gegenelektroden hineinragen, die mit der Tragfeder mechanisch gekoppelt sind.

Durch die zwischen den Ringelektroden freibleibenden Schlitze ergeben sich somit definierte Überströmspalten für die hydraulische Flüssigkeit. Wird jetzt zwischen den unteren feststehenden Elektroden und den oberen, mit der Tragfeder gekoppelten Gegenelektroden ein Feld angelegt, so erhöht sich dadurch die Viskosität der elektroviskosen Flüssigkeit und damit der Strömungswiderstand, in den Überströmkanälen, wodurch in bekannter Weise die Steifigkeit ansteigt.

Darüber hinaus führt aber die nunmehr auftretende Schubspannung zwischen den beweglichen oberen und den feststehenden unteren Elektroden zu einem weiteren Anstieg der Steifigkeit, die weit über das Maß hinausgeht, das durch die Volumensteifigkeit der oberen Kammer gegeben ist.

Nach einer bevorzugten Ausführungsform kann die als feststehende Elektrode dienende Zwischenplatte aus einem zylindrischen Block aus leitfähigem Material bestehen, in den von einer Stirnseite her Ringspalte eingeschnitten sind, deren stehenbleibende Zwischenwände die Elektrodenringe bilden und bei dem vom Grund der Ringspalte aus Durchtrittsöffnungen für die Flüssigkeit zur anderen Stirnseite ausgehen.

Dabei ist die Elektrode zweckmäßigerweise in einem Ring aus Isoliermaterial innerhalb des Lagergehäuses gehalten.

Die Gegenelektrode besteht zweckmäßigerweise aus einer glockenförmigen Haube, von der nach unten zwei konzentrisch zueinander verlaufende Elektrodenringe mit einem dazwischenliegenden Ringspalt ausgehenden und wobei die Gegenelektrode zentral mit einem die Motorlagerplatte durchsetzenden Bolzen kraftschlüssig verbunden ist. Dabei weist die Haube Flüssigkeitsdurchtrittsöffnungen auf, die mit den Ringspalten zwischen den Elektrodenringen fluchten.

Um bei Auftreten von Querkräften einen Kurzschluß zwischen den konzentrischen Elektrodenringen zu vermeiden, ist darüber hinaus das innenliegende Ende des Bolzens bis in den Bereich der feststehenden Elektrode verlängert und zwischen dem Bolzenende und dem inneren, feststehenden Elektrodenring eine schubweiche, aber radial steife Gummibuchse eingesetzt.

Anhand einer schematischen Zeichnung sind Aufbau und Wirkungsweise eines Ausführungsbeispiels nach der Erfindung näher erläutert.

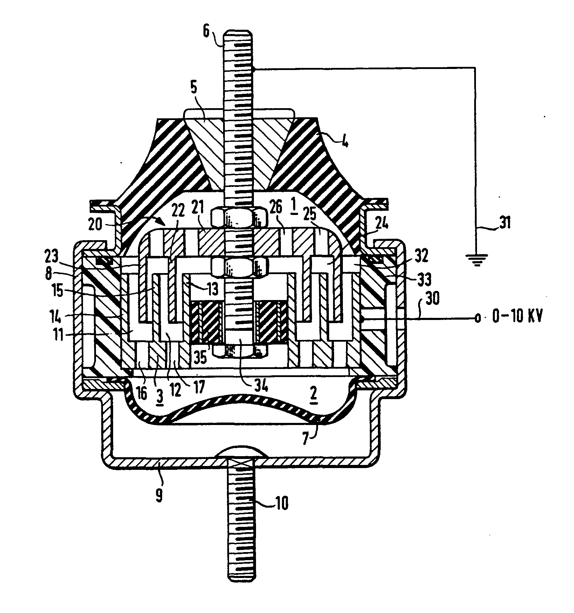

Dabei zeigt die einzige Figur einen Längsschnitt durch ein aktives Zweikammer-Motorlager.

Wie aus der einzigen Figur zu ersehen ist, weist das Zweikammer-Motorlager zunächst in herkömmlicher Weise eine obere, motorseitige Kammer 1 und eine untere Kammer 2 auf, die über in der noch zu beschreibenden Zwischenplatte 3 verlaufende Kanäle miteinander in Verbindung stehen. Die obere Kammer 1 wird von einer starkwandigen, hohlkegelförmigen Kammerwandung 4, der sog. Tragfeder, begrenzt, die an der oberen Stirnseite mit einer Lagerplatte 5 sowie einem Bolzen 6, an dem beispielsweise der nicht näher dargestellte Motor festgelegt sein kann, versehen ist. Die untere Kammer 2 ist von einer beispielsweise tassenförmigen Kammerwandung 7 aus ebenfalls gummielastischem, jedoch weicherem Material als das der Kammerwandung 4 gebildet, da die Kammer 2 praktisch nur als Ausgleichskammer fungiert. Alle Lagerteile sind über einen umlaufenden Ringflansch 8 miteinander flüssigkeitsdicht verspannt, wobei der Ringflansch 8 tassenförmig in den unteren Gehäusedeckel 9 mit einem Anschlußbolzen 10 zum Festlegen an der Fahrzeugkarosserie übergehen kann.

Die Zwischenplatte 3 ist nunmehr als feststehende Elektrode ausgebildet und besteht nach dem dargestellten Ausführungsbeispiel aus einem zylindrischen Ring aus leitfähigem Material, in den von der oberen Stirnseite her zwei Ringspalte 11 und 12 eingeschnitten sind, wobei die stehenbleibenden Zwischenwände 13, 14 und 15 die Elektrodenringe bilden. Vom Grund der Ringspalte 11 und 12 gehen dann Druchtrittsöffnungen 16 und 17 in Form von Bohrungen oder kreisabschnittförmigen Schlitzen zur anderen Stirnseite der Zwischenplatte 3 aus, um damit eine hydraulische Verbindung zur unteren Ausgleichskammer 2 herzustellen.

Die Gegenelektrode 20 besteht aus einer glokkenförmigen Haube 21, von der nach dem dargestellten Ausführungsbeispiel nach unten zwei ebenfalls konzentrisch zueinander verlaufende Elektrodenringe 22 und 23 ausgehen, die einen Ringspalt 24 einschließen. Die Haube 21 ist dabei zentral kraftschlüssig mit dem Bolzen 6 verbunden, der die Lagerplatte 5 durchsetzt und nach unten bis in den unteren Bereich der feststehenden Elektrode 3 reicht. Zusätzlich weist die Haube 21 noch Durchbrechungen 25 und 26 auf, um einen Flüssigkeitsdurchtritt von der Kammer 1 in den Ringspalt 24 und den Raum innerhalb des Elektrodenringes 22 zu ermöglichen.

Durch die starre Kopplung der Gegenelektrode 20 mit dem Motor bzw. der Tragfeder 4 werden jetzt die Elektrodenringe 22 und 23 auftretenden Schwingungen unmittelbar folgen und kammartig in die Ringspalte 11 und 12 der Elektrodenringe 13, 14 und 15 eintauchen. Bei größeren Amplituden niedriger Frequenz erfolgt dann ein Flüssigkeitsaustausch von Kammer 1 nach Kammer 2, wobei durch die Ringspalte 11 und 12 sowie 24 bzw. die darin eintauschenden Elektrodenringe 22 und 23 die Geometrie der Überströmkanäle und damit eine entsprechende Flüssigkeitsdämpfung gegeben ist. Die Flüssigkeitsströmung wird dabei durch die mitbewegte obere Haube 21 noch unterstützt.

Da das Lager aber mit einer elektroviskosen Flüssigkeit gefüllt ist, die beispielsweise aus einer Mischung aus Kieselsäure als Feststoff, einer geeigneten organischen Phase mit niedriger Dielektrizitätskonstante, wie beispielsweise Isododecan, und einem Dispergiermittel besteht, wird sich bei Anlagen einer Spannung an die Elektroden 3 und 20 über die Zuleitungen 30 und 31 die Viskosität der Flüssigkeit und damit der Strömungswiderstand in den Überströmkanälen erhöhen, wodurch die Steifigkeit des Lagers ansteigt. Durch die darüber hinaus auftretenden Schubspannungen zwischen der beweglichen oberen Elektrode 20 und der fest eingespannten unteren Elektrode 3 tritt ein weiterer Steifigkeitsanstieg auf, der erheblich größer ist als die Volumensteifigkeit der oberen Kammer 1. Damit ergibt sich eine deutliche Erhöhung der dynamischen Wechselkräfte, selbst wenn die obere Kammer 1 sehr volumenweich ausgeführt ist und/oder theoretisch gar nicht vorhanden wäre.

Selbstverständlich müssen beide Elektroden 3 und 20 elektrisch isoliert angeordnet sein. Dazu ist die Elektrode 3 in die zylindrische Ausnehmung 32 eines Ringes 33 aus Isoliermaterial eingesetzt, wobei der Ring 33 durch den Ringflansch 8 mit dem Oberteil 4 und der unteren Kammerwandung 7 verspannung ist. In gleicher Weise ist die Haube 21 gegenüber dem Gehäuse zu isolieren.

Um darüber hinaus einen Kurzschluß zwischen den konzentrischen Elektrodenringen 13, 14 und 15 einerseits sowie 22 und 23 andererseits zu verhindern, ist zwischen dem innenliegenden Ende 34 des Bolzens 6 und dem inneren Elektrodenring 13 eine ringförmige Gummibuchse 35 eingesetzt, die schubweich, aber radial steif ausgeführt ist. Dadurch werden Bewegungen in vertikaler Richtung zugelassen; es wird aber verhindert, daß sich die Elektroden durch Verkanten in unzulässiger Weise annähern, was zu einem Überschlag führen könnte.

Im Ausführungsbeispiel sind jeweils Elektroden mit nur einer bestimmten Anzahl von Elektrodenringen bzw. Ringspalten dargestellt. Selbstverständlich sind von der Erfindung auch solche Ausführungen erfaßt, die eine abweichende Konfiguration und/oder Anzahl der Elektroden bzw. der Elektrodenringe aufweisen. Wesentlich ist nur, daß die Elektroden gegeneinander die Strömungskanäle bilden und in ihrer Lage zueinander bzw. ihrem Überdeckungsgrad verschiebbar angeordnet sind.

## Patentansprüche

1. Aktives Zweikammer-Motorlager mit hydraulischer Dämpfung, dessen mit einer elektroviskosen Flüssigkeit gefüllten und gummielastische Umfangswände (4, 7) aufweisenden Kammern (1, 2) über einen, durch parallele Elektroden (3, 20) begrenzten Kanal (11, 12) in Verbindung stehen, wobei die Viskosität der Flüssigkeit durch Anlegen eines elektrischen Feldes im Bereich des Kanals steuerbar ist, dadurch gekennzeichnet, daß sich die Elektroden (13, 14, 15; 22, 23) in der Lastrichtung des Lagers erstrecken, wobei die erste Elektrode (13, 14, 15) an einer starren, die Kammern (1, 2) voneinander trennenden Zwischenplatte (3) angeordnet ist und die Gegenelektrode (22, 23) mit der als Tragfeder (4) wirkenden Kammerwandung mechanisch gekoppelt ist, wodurch der Überdeckungsgrad der Elektroden (13, 14, 15; 22, 23) in Abhängigkeit von der Einfederung der Tragfeder (4) veränderbar ist.

2. Aktives Zweikammer-Motorlager nach Anspruch 1, dadurch gekennzeichnet, daß die Zwischenplatte (3) mindestens zwei konzentrisch angeordnete, ringförmige Elektroden (13, 14, 15) mit dazwischenliegenden Ringspalten (11, 12) aufweist, in die von oben ebenfalls konzentrisch angeordnete, ringförmige Gegenelektroden (22, 23) hineinragen, die mit der Tragfeder (4) mechanisch gekoppelt sind.

3. Aktives Zweikammer-Motorlager nach Anspruch 2, dadurch gekennzeichnet, daß die als feststehende Elektrode (3) dienende Zwischenplatte aus einem zylindrischen Ring aus leitfähigem Material besteht, in den von einer Stirnseite her Ringspalte (11, 12) eingeschnitten sind, deren stehenbleibende Zwischenwände die Elektrodenringe (13, 14, 15) bilden, und daß vom Grund der Ringspalte (11, 12) Durchtrittsöffnungen (16, 17) für die Flüssigkeit zur anderen Stirnseite ausgehen.

4. Aktives Zweikammer-Motorlager nach Anspruch 3, dadurch gekennzeichnet, daß die Elektrode (3) in einem Ring (33) aus Isoliermaterial innerhalb des Lagergehäuses (8) haltert ist.

5. Aktives Zweikammer-Motorlager nach Anspruch 3, dadurch gekennzeichnet, daß die Gegenelektrode (20) aus einer glockenförmigen Haube (21) besteht, von der nach unten zwei konzentrisch zueinander verlaufende Elektrodenringe (22, 23) mit einem dazwischenliegenden Ringspalt (24) ausgehen, und daß die Gegenelektrode (20) zentral mit einem die Motorlagerplatte (5) durchsetzenden Bolzen (6) kraftschlüssig verbunden ist.

6. Aktives Zweikammer-Motorlager nach Anspruch 5, dadurch gekennzeichnet, daß die Haube (21) Flüssigkeits-Durchtrittsöffnungen (25, 26) aufweist, die mit den Ringspalten (24) zwischen den Elektrodenringen (22, 23) fluchten.

7. Aktives Zweikammer-Motorlager nach Anspruch 1 und 5, dadurch gekennzeichnet, daß das innenliegende Ende (34) des Bolzens (6) bis in den Bereich der feststehenden Elektrode (3) verlängert ist und zwischen dem Bolzenende (34) und dem inneren, feststehenden Elektrodenring (13) eine schubweiche, aber radial steife Gummibuchse (35) eingesetzt ist.

**Revendications**

1. Support actif à double chambre et à amortissement hydraulique pour moteur, dont les chambres (1, 2), qui sont emplies d'un liquide électrovisqueux et qui comportent des parois périphériques (4, 7) ayant l'élasticité du caoutchouc, communiquent par un canal (11, 12) délimité par des électrodes (3, 20) parallèles, la viscosité du liquide pouvant être commandée par application d'un champ électrique dans la région du canal, caractérisé en ce que les électrodes (13, 14, 15; 22, 23) s'étendent dans la direction de la charge du support, la première électrode (13, 14, 15) étant montée sur une plaque intermédiaire (3) rigide, séparant les chambres (1, 2) l'une de l'autre et la contre-électrode (22, 23) étant couplée mécaniquement à la paroi de la chambre servant de ressort porteur (4), de manière à pouvoir modifier le degré de recouvrement des électrodes (13, 14, 15; 22, 23) en fonction de la compression du ressort porteur (4).

2. Support actif à deux chambres pour moteur suivant la revendication 1, caractérisé en ce que la plaque intermédiaire (3) comporte au moins deux électrodes (13, 14, 15) annulaires, disposées concentriquement avec entre elles des fentes annulaires (11, 12) dans lesquelles pénètrent par le haut des contre-électrodes (22, 23) annulaires qui sont disposées également concentriquement et qui sont couplées mécaniquement au ressort de suspension (4).

3. Support actif à deux chambres pour moteur suivant la revendication 2, caractérisé en ce que la plaque intermédiaire servant d'électrode (3) fixe est constituée d'un anneau cylindrique en matériau conducteur, dans lequel sont taillées d'un côté frontal des fentes annulaires (11, 12) dont les parois intermédiaires subsistantes forment les électrodes annulaires (13, 14, 15) et en ce que des ouvertures de passage (16, 17) pour le liquide s'étendent du fond des fentes annulaires (11, 12) à l'autre côté frontal.

4. Support actif à deux chambres pour moteur suivant la revendication 3, caractérisé en ce que l'électrode (3) est maintenue dans un anneau (33) en matière isolante à l'intérieur du corps du support (8).

5. Support actif à deux chambres pour moteur suivant la revendication 3, caractérisé en ce que la contre-électrode (20) est constituée d'une calotte (21) en forme de cloche, de laquelle partent vers le bas deux anneaux formant électrode (22, 23) s'étendant concentriquement l'un à l'autre et ayant entre eux une fente annulaire (24) et en ce que la partie centrale de la contre-électrode (20) est reliée positivement à un boulon (6) traversant la plaque-d'appui du moteur (5).

6. Support actif à deux chambres pour moteur suivant la revendication 5, caractérisé en ce que la calotte (21) comporte des orifices de passage du liquide (25, 26), qui sont alignés avec les fentes annulaires (24) comprises entre les anneaux formant électrode (22, 23).

7. Support actif à deux chambres pour moteur suivant la revendication 1 ou 5, caractérisé en ce que l'extrémité intérieure (34) du boulon (6) est prolongée jusque dans la région de l'électrode fixe (3) et entre l'extrémité du boulon (34) et l'anneau interne formant électrode (13), qui est fixe, est insérée une douille en caoutchouc (35) déformable sous l'effet d'une poussée transversale, mais rigide radialement.

**Claims**

1. Active twin-chamber engine bearing with hydraulic damping, whose chambers (1, 2), filled with an electroviscous fluid and having rubber elastic peripheral walls (4, 7), are interconnected by means of a channel (11, 12) defined by parallel electrodes (3, 20), the viscosity of the fluid being controllable by applying an electrical field in the region of the channel, characterised in that the electrodes (13, 14, 15; 22, 23) extend in the direction of load of the bearing, with the first electrode (13, 14, 15) being disposed on a rigid spacer plate (3) separating the chambers (1, 2) from one another while the counter electrode (22, 23) is mechanically coupled to the chamber wall serving as a bearing spring (4), with the result that the extent of coverage of the electrodes (13, 14, 15; 22, 23) is variable in dependence upon the spring deflection of the bearing spring (4).

2. Active twin-chamber engine bearing according to claim 1, characterised in that the spacer plate (3) has at least two concentrically disposed annular electrodes (13, 14, 15) having annular gaps (11, 12) located therebetween into which similarly concentrically disposed annular counter electrodes (22, 23) project from above said counter electrodes being mechanically coupled to the bearing spring (4).

3. Active twin-chamber engine bearing according to claim 2, characterised in that the spacer plate serving as a stationary electrode (3) comprises a cylindrical ring made of conductive material in which annular gaps (11, 12) are cut from one face, the remaining intermediate walls of which form the electrode rings (13, 14, 15), and in that through-openings (16, 17) for the fluid extend from the base of the annular gaps (11, 12) to the other face.

4. Active twin-chamber engine bearing according to claim 3, characterised in that the electrode (3) is held in a ring (33) made of insulating material inside the bearing housing (8).

5. Active twin-chamber engine bearing according to claim 3, characterised in that the counter electrode (20) comprises a bell-shaped hood (21) from which two electrode rings (22, 23), which extend concentrically relative to one another and have an annular gap (24) disposed between them, extend downwards, and in that the counter electrode (20) is centrally connected in a non-positive manner to a pin (6) passing through the engine bearing plate (5).

6. Active twin-chamber engine bearing according to claim 5, characterised in that the hood (21) has openings (25, 26) for the passage of fluid which are flush with the annular gaps (24) between the electrode rings (22, 23).

7. Active twin-chamber engine bearing according to claims 1 and 5, characterised in that the inner-lying end (34) of the pin (6) is extended into the region of the stationary electrode (3) and an axially nonrigid but radially rigid rubber bush (35) is inserted between the pin end (34) and the inner stationary electrode ring (13).

5